# EUROPEAN PATENT APPLICATION

(11) **EP 4 652 835 A1**
(43) Date of publication of application: **26.11.2025**
(21) Application number: 24178042.8
(22) Date of filing: 24.05.2024
(51) Int. Cl.: A01M 1/02, A01M 1/10

(54) **A MONITORING DEVICE FOR DETERMINING THE PRESENCE OF BED BUGS AND A METHOD FOR DETERMINING THE PRESENCE OF BED BUGS IN A MONITORING DEVICE**

(71) Applicant: Anticimex Innovation Center A/S, 3200 Helsinge (DK)
(72) Inventor: RAGNARSSON, Bergsteinn Gauti, 3200 Helsinge (DK); SØRENSEN, Claus Bach, 3200 Helsinge (DK)
(74) Representative: Zacco Denmark A/S

(57) **Abstract**

The disclosure relates to a monitoring device for determining the presence of bed bugs, the monitoring device comprising: a housing arranged to receive bed bugs entering into the housing; a light source arranged to illuminate a detection region within the housing; a light detector arranged to receive light from the light source being reflected by or transmitted through one or more objects within the detection region, and wherein the light detector is configured to output a detection signal in response to the detected light, the detection signal pertaining to an intensity and/or a spectral composition of the light detected; and circuitry configured to determine if one or more bed bugs are present in the detection region based on the detection signal and predetermined optical characteristics for one or more bed bugs. The disclosure further relates to a method for determining the presence of bed bugs in a monitoring device.

## Description

### Technical field

The present disclosure relates generally to determining the presence of a pest. In more detail, to a monitoring device for determining the presence of bed bugs. The disclosure also relates to a method for determining the presence of bed bugs in the monitoring device. More specifically, the disclosure relates to a monitoring device for determining the presence of bed bugs and a method for determining the presence of bed bugs in a monitoring device as defined in the introductory parts of the independent claims.

### Background art

Over the past two decades, there has been a resurgence in bed bug populations in many parts of the world, including the United States, Europe, Australia, and parts of Asia. This resurgence may be attributed to factors such as increased international travel, resistance to pesticides, and changes in pest management practices. Bed bugs, also referred to as bedbugs, (Cimex lectularius) are small, wingless insects that belong to the family Cimicidae. They are ectoparasites, meaning they feed on the blood of humans and other warm-blooded animals.

Bed bug infestations can have a significant impact on the physical, emotional, and financial well-being of those affected, highlighting the importance of early detection and effective pest management strategies. Bed bugs tend to thrive in densely populated urban areas, where they can easily spread from one location to another via shared living spaces, public transportation, and infested furniture. High-rise buildings, such as apartment complexes and hotels, are particularly susceptible to bed bug infestations due to the close proximity of residents and the ease of movement between different locations.

Overall, bed bugs are resilient pests that can be difficult to control once they become established in a home or other environment. Effective bed bug management typically requires a combination of thorough inspection, targeted treatments, and preventive measures to minimize the risk of infestation. Bed bugs also reproduce quickly, and a small infestation can rapidly escalate into a larger problem if unnoticed. Early detection allows for prompt action to contain the infestation and prevent it from spreading to other areas of the home or building.

Detecting bed bugs can, however, be challenging due to their small size, nocturnal behavior, and ability to hide in tight spaces. There is therefore a need for more efficient measures to detect bed bugs. There is further a need for early detection to mitigate infestation and/or spreading.

### Summary

It is an object of the present disclosure to mitigate, alleviate or eliminate one or more of the above-identified deficiencies and disadvantages in the prior art and solve at least the above-mentioned problem.

According to a first aspect there is provided a monitoring device for determining the presence of bed bugs. The monitoring device comprising: a housing arranged to receive bed bugs entering into the housing; a light source arranged to illuminate a detection region within the housing; a light detector arranged to receive light from the light source being reflected by or transmitted through one or more objects within the detection region, and wherein the light detector is configured to output a detection signal in response to the detected light, the detection signal pertaining to an intensity and/or a spectral composition of the light detected; and circuitry configured to determine if one or more bed bugs are present in the detection region based on the detection signal and predetermined optical characteristics for one or more bed bugs.

An advantage may be that a more precise monitor device is provided. Put differently, the monitor device may more efficiently determine if one or more bed bugs are present within the monitoring device. The monitoring device may discriminate, based on the predetermined optical characteristics for one or more bed bugs, between one or more bed bugs and other insects and/or objects that may be present in the monitoring device. The likelihood of false-positives may thereby be reduced. A more reliable monitoring device may be provided.

The term "optical characteristics for one or more bed bugs" may be understood as the reflection and/or absorption properties of the one or more bed bugs. The optical characteristics may be understood to determine how the bed bugs, when illuminated, with the lights source, interact with the light. In other words, the optical response from the one or more bed bugs may be detected by the light detector. The optical characteristics may vary depending on factors such as surface texture, material composition, and color, of the bed bugs. Put differently, the optical properties, e.g. the reflection and absorption properties, play a fundamental role in defining the visual appearance of the bed bugs within the monitoring device. By way of example, the bed bugs may exhibit a red or reddish-brown coloration when illuminated with white light. The color may vary depending on factors such as age, feeding status, and environmental conditions. Adult bed bugs are typically reddish-brown in color. The intensity of their color may vary from light brown to deep reddish-brown or red, and their bodies may appear more translucent after feeding on blood. Nymphs are smaller and may be lighter in color than adult bed bugs. The nymphs may appear pale or translucent immediately after hatching and gradually darken to a reddish-brown color as they feed and mature. The color of a bed bug may also change depending on its feeding status. After feeding on blood, bed bugs become engorged and their bodies may appear darker.

The circuitry may further be configured to determine if the type of the one or more bed bugs present in the detection region based on the detection signal and a set if predetermined optical characteristics for one or more bed bugs. The set of predetermined optical characteristics may comprise data pertaining to the optical properties of different types of bed bugs, different stages of the bed bugs and/or if the bed bugs have been fed.

The predetermined optical characteristics for one or more bed bugs may be obtained by performing optical measurements on verified bed bugs. Put differently, the predetermined optical characteristics may be provided by reference measurements on insects known to be bed bugs. The predetermined optical characteristics may pertain to the type of bed bugs, stages of the bed bugs and/or if the bed bugs have been fed. A set of predetermine optical characteristics may be provided.

The monitoring device may comprise an attractant. The attractant may be arranged to attract the bed bugs by odor. The monitoring device may be a trap device arranged to trap bed bugs entering into the device. The monitoring device may by comprise a container region in which the bed bugs are trapped. The container region may be formed by a recess. The recess may have large angle walls, i.e. steep wall sides, such that the captured bed bugs are prevented from crawling out of the recess. Put differently, the container region may have walls with sharp inclination. The detection region may be within the container region. The detection region may be inside the recess.

According to some examples, the circuitry is configured to register a presence event upon the determined presence of one or more bed bugs in the detection region.

An advantage may be that the presence of one or more bed bugs may be efficiently recorded. The registering may allow for a build up of statistical data. Indications of an increase in or the presence of a bed bug infestation may thereby be efficiently detected.

According to some examples, the predetermined optical characteristics may pertain to a bed bug light reflection profile or a bed bug light transmission profile.

An advantage being that the optical response of the one or more bed bugs may be utilized to determine the presence of bed bugs.

According to some examples, the detection signal may pertain to a change in the intensity and/or a change in the spectral composition of the light detected.

An advantage may be that a cost-efficient monitoring device may be provided. A more sensitive monitoring device may be provided. By way of example, changes in intensity and/or spectral composition of the light detected may act as a fingerprint for one or more bed bugs. A more specific monitoring device may be provided. By way of example, the intensity and/or spectral composition may pertain to changes over a wavelength interval. The wavelength interval may be predetermined. Put differently, the wavelength interval may be set to match a characteristic spectral distribution of the bed bug light reflection profile or the bed bug light transmission profile. By way of example, the characteristic spectral distribution may pertain to a local or global maximum or minimum of the bed bug light reflection profile or the bed bug light transmission profile.

According to some examples, the circuitry may further be configured to output an alert signal indicative of the presence event.

An advantage may be that the presence of one or more bed bugs is efficiently signaled. A quick response to the presence event may thereby be initiated. Problems associated with bed bug infestation and spread may thereby be mitigated. The alert signal may be a visual and/or a sound signal.

According to some examples, the monitoring device may further comprise a communication unit and wherein the circuitry is configured to, via the communication unit transmit the alert signal to a server. The alert signal may be an electrical signal.

One or more monitoring devices may thereby be observed efficiently. The monitoring device may thereby be observed remotely. The need for an observer to visit the location of the monitoring device may further be reduced. A quick response to the presence event may thereby be initiated, for example by a third party such as a company providing pest control. Data pertaining alert signals from a plurality of monitoring devices may be recorded in the server.

The monitoring device may comprise a geolocation. The monitoring device may comprise a geolocation device such as a GPS. A geolocation of the monitoring device may be stored in the monitoring device and/or in the server. The alert signal may comprise the geolocation of the monitoring device. A more efficient mapping of the alarm signals from one or more monitoring devices may therefore be provided. An improved prediction of a bed bug infestation may thereby be provided.

According to some examples, the monitoring device further comprises a reference object arranged within the detection region, the reference object having a reference object light reflection profile and/or a reference object light transmission profile, and wherein the circuitry is further configured to determine if a bed bug is present in the detection region based the reference object light reflection profile or the reference object light transmission profile.

An advantage being that a more precise determining of the presence of one or more bed bugs may be provided. Put differently, the reference object light reflection profile or the reference object light transmission profile may allow for an efficient calibration and/or normalization of the detected light. By illuminating the reference object with light from the light source and detecting, by the light detector, light being reflected by or transmitted through the reference object the reference object light reflection profile or the reference object light transmission profile may be acquired. A more accurate determining of the optical properties of the reference object may thereby be obtained. The optical characteristics of the light source may, moreover, be determined in an efficient manner. The procedure to determine the optical characteristics of the light source and/or reference object may be understood as a calibration procedure. The calibration procedure may be performed repeatedly. An advantage may be that changes to the light source and/or the reference object may be determined. By way of example, a degradation of the light source may be detected. A change to the reference object, e.g. due to contamination may also be detected. The contamination may, for example, be due to dust, spider web, insect feces, stains etc. Changes to the detection region which may affect the detection signal may be accounted for. Put differently, by taking these changes into account a more sensitive and reliable monitoring device may be provided.

According to some examples, the light emitted from the light source has a first spectral range, SR1, and wherein the light detector is arranged to detect light in a second spectral range, SR2, the second spectral range SR2, being different from the first spectral range, SR1, and wherein the second spectral range, SR2, match spectrally at least a part of the bed bug light reflection profile or the bed bug light transmission profile.

An advantage may be that the two spectral ranges may function as a filter. A less complex determining of if one or more bed bugs are present in the detection region may be provided. By way of example, the first spectral range, SR1, may be broader that the second spectral range, SR2. As an example, the first spectral range, SR1, may be white light, e.g. from a white light emitting diode, and the second spectral range, SR2, may cover a red part of the white light.

By way of example, the first spectral range, SR1, covers a wavelength range from 400 nm to 800 nm, preferably from 500 nm to 750 nm and wherein the second spectral range, SR2, covers a wavelength range from 550 nm to 730 nm, preferably between 600 nm and 720 nm, more preferably between 620 and 710 nm.

According to some examples, the light emitted from the light source may have a spectral range, SR, and the light detector is arranged to detect light in the same spectral range, SR, wherein the spectral range, SR, match spectrally at least a part of the bed bug light reflection profile, and wherein the circuitry is configured to determine if one or more bed bugs are present in the detection region based on a change in the detection signal being indicative of a change in light intensity on the light detector and the bed bug light reflection profile.

An advantage may be that a cost-effective monitoring device is provided. The spectral range, SR, may be set to spectrally match a region of the bed bug light reflection profile or the bed bug light transmission profile. The matched region may, by way of example, comprise a local minimum or local maximum of the bed bug light reflection profile or the light transmission profile. By way of example, the spectral range, SR, may be matched with a local or global maximum in light reflection for the bed bug. Put differently, the bed bug light reflection profile may have a local maximum to which the light emitted from the light source is matched in wavelength. The spectral range, SR, may be in the red part of the visible spectra. The light source may be a light source emitting red light. The red-light source may be a red light emitting diode, LED. A reduced energy consumption may be achieved. The need for light filtering may, moreover, be reduced. Additional components in the optical path of the light detector may be mitigated. A small foot print may be achieved. An advantage may be that light reflected from bed bugs is stronger in intensity than light reflected from other insects. By way of example, the red or red-brown color of the bed bugs may be utilized to distinguish bed bugs from other insects. A more reliable monitoring device may be provided.

According to some examples, the housing comprises a transparent surface and the light source is arranged such that the detection region is on the transparent surface, and wherein the light source and the light detector are arranged on opposing sides of the transparent surface.

An advantage may be that light transmission measurements may be performed within the monitoring device. The transmission and/or absorption properties of insects within the detection region may thereby be determined. The monitoring device may be arranged to determine reflection and transmission properties of insects within the detection region. A more accurate determining of the presence of a bed bug may thereby be obtained. The number of false positives may further be reduced. The transparent surface may act as an optical filter.

According to some examples, the light emitted from the light source may have a spectral range, SR, and the light detector is arranged to detect light in the same spectral range, SR, wherein the spectral range, SR, match spectrally at least a part of the bed bug light reflection profile and wherein the circuitry is configured to determine if one or more bed bugs are present in the detection region based on a change in the detection signal being indicative of a decrease in light intensity on the light detector and the bed bug light absorption profile.

An advantage being that the specific reflection and/or absorption properties of a bed bug is utilized to determine the presence of one or more bed bugs in the monitoring device.

The type of change in intensity may depend on the position of the detector in relation to the light source. In a reflection type of setup, the change may be an increase in intensity. If the bed bug is arranged in between the light source and the detector, the change in intensity may be a decrease in intensity. The latter may, for example be for an absorption type of setup.

The spectral range, SR, may cover a wavelength range from 550 nm to 730 nm, preferably between 600 nm and 720 nm, more preferably between 620 and 710 nm.

According to some examples, the monitoring device comprises an optical filter is arranged in front of the light detector, the optical filter comprising one or more of a high-pass filter, a low-pass filter, and a band pass filter arranged to pass light having a wavelength range corresponding to that of the bed bug light reflection profile or the bed bug light transmission profile.

An advantage may be that ambient light may be prevented from reaching the light detector. Limitations or artifacts of the light source may, moreover, be compensated for.

According to some examples, the monitoring device may comprise additional sensors for determined the presence of insects within the monitoring device. By way of example, the additional sensor may be selected from the group of gas sensors, audio sensor, capacitive sensors. An advantage may be that a more accurate determining of the presence of bed bugs may be achieved. The number of false positives may further be reduced.

According to some examples the monitoring device may further comprise a capacitive sensor arranged to output a trigger signal in response to a presence of an insect within the housing, and wherein the circuitry is further configured to receive the trigger signal and to initiate the light source to illuminate the detection area.

The housing may further comprise a maze structure, the maze structure being arranged to start from an insect entry point to the detection region, wherein the maze structure is arranged such that light present outside the monitoring device is hindered from reaching the detection area.

The light source may be a light emitting diode, LED.

The light detector may be a photo diode, PD.

The light detector may comprise a wavelength dispersive element.

The light detector may be a camera.

According to a second aspect there may be provided a method for determining the presence of bed bugs in a monitoring device, the monitoring device comprising: a housing arranged to receive bed bugs entering into the housing, a light source, a light detector, and a circuitry; the method comprising: illuminating by the light source a detection region within the housing ; receiving, by the light detector, light from the light source being reflected by or transmitted through one or more objects within the detection region; outputting, by the light detector, a detection signal in response to the detected light, the detection signal pertaining to an intensity and/or a spectral composition of the light detected; and determining, by the circuitry, if one or more bed bugs are present in the detection region based on the detection signal and predetermined optical characteristics for one or more bed bugs.

According to some examples, the method may comprise registering a presence event upon the determined presence of one or more bed bugs in the detection region.

According to some examples, the monitoring device may comprise a communication unit and wherein the method further comprises by the circuitry: outputting an alert signal indicative of the presence event and transmitting, via the communication unit, the alert signal to a server or another monitoring device.

Effects and features of the second aspect are to a large extent analogous to those described above in connection with the first aspect. Examples mentioned in relation to the first aspect are largely compatible with the the second aspect.

The present disclosure will become apparent from the detailed description given below. The detailed description and specific examples disclose preferred examples of the disclosure by way of illustration only. Those skilled in the art understand from guidance in the detailed description that changes and modifications may be made within the scope of the disclosure.

Hence, it is to be understood that the herein disclosed disclosure is not limited to the particular component parts of the device described or steps of the methods described since such device and method may vary. It is also to be understood that the terminology used herein is for purpose of describing particular examples only, and is not intended to be limiting. It should be noted that, as used in the specification and the appended claim, the articles "a", "an", "the", and "said" are intended to mean that there are one or more of the elements unless the context explicitly dictates otherwise. Thus, for example, reference to "a unit" or "the unit" may include several devices, and the like. Furthermore, the words "comprising", "including", "containing" and similar wordings does not exclude other elements or steps.

### Brief descriptions of the drawings

The above objects, as well as additional objects, features and advantages of the present disclosure, will be more fully appreciated by reference to the following illustrative and non-limiting detailed description of examples of the present disclosure, when taken in conjunction with the accompanying drawings.
Figures 1a and 1b show cross-sectional side views of monitoring devices according to some examples of the present disclosure.
Figures 2a to 2d show schematically optical characteristics of a plurality of objects according to some examples of the present disclosure.
Figure 3 shows a cross-sectional side view of a monitoring device according to some examples of the present disclosure.
Figures 4a to 4e show a monitoring device and a number of different combinations of light emission and light detection for determining the presence of one or more bed bugs in a detection region.
Figures 5a to 5e show another monitoring device and a number of different combinations of light emission and light detection for determining the presence of one or more bed bugs in a detection region.
Figure 6 shows schematically a flow chart of a method for determining the presence of bed bugs in a monitoring device.

### Detailed description

The present disclosure will now be described with reference to the accompanying drawings, in which preferred examples are shown. The disclosure may, however, be embodied in other forms and should not be construed as limited to the herein disclosed examples. The disclosed examples are provided to fully convey the scope of the disclosure to the skilled person.

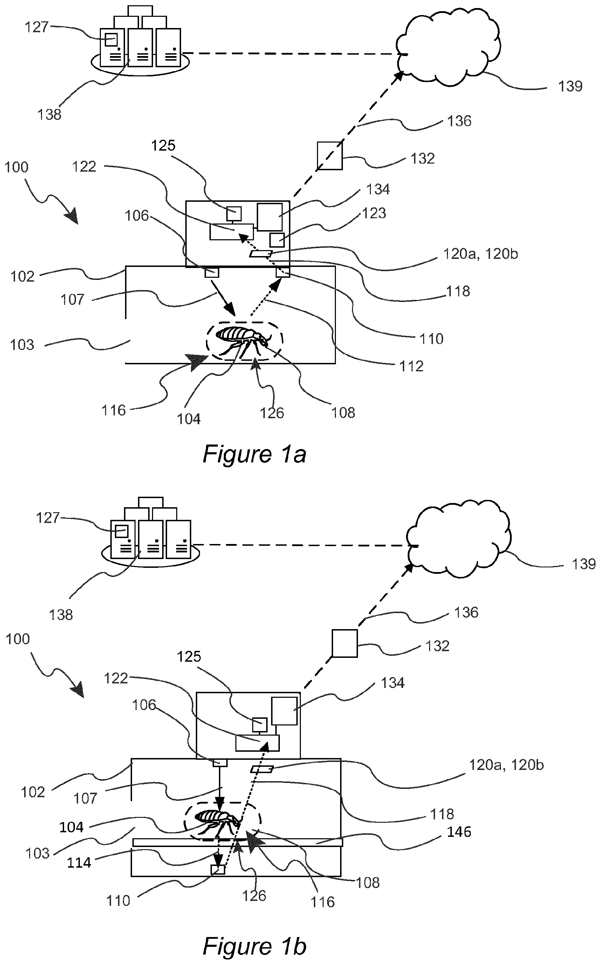

Figures 1a and 1b show cross-sectional side views of monitoring devices according to some examples of the present disclosure. With reference to Figure 1a, a monitoring device 100 for determining the presence of one or more bed bugs is illustrated. The monitoring device 100 is arranged to utilize light reflected from insects present in the monitoring device 100. In more detail, the monitoring device 100 comprises a housing 102 arranged to receive bed bugs 104 entering into the housing 102. The housing 102 may have an opening 103 through which the insects may enter. The monitoring device 100 comprises a light source 106 arranged to illuminate 107 a detection region 108 within the housing 102. A light detector 110 is arranged in the monitoring device 100 to receive light from the light source 106 being reflected 112 by one or more objects 116 within the detection region 108. The light detector 110 is configured to output a detection signal 118 in response to the detected light. The detection signal 118 is pertaining to an intensity 120a and/or a spectral composition 120b of the light detected. The monitoring device 100 further comprises circuitry 122. The circuitry 122 is configured to determine if one or more bed bugs 104 are present in the detection region 108 based on the detection signal 118 and predetermined optical characteristics for one or more bed bugs 104. The monitoring device may comprise a geolocation device 123.

With reference to Figure 1b a monitoring device for determining the presence of bed bugs is illustrated. The monitoring device 100 is arranged to utilize light transmitted through insects present in the monitoring device 100. In more detail, the monitoring device 100 comprises a housing 102 arranged to receive bed bugs 104 entering into the housing 102. The housing 102 may have an opening 103 through which the insects may enter. The monitoring device 100 comprises a light source 106 arranged to illuminate 107 a detection region 108 within the housing 102. A light detector 110 is arranged in the monitoring device to receive light from the light source 106 being transmitted 114 through one or more objects 116 within the detection region 108. The light detector 110 is configured to output a detection signal 118 in response to the detected light. The detection signal 118 is pertaining to an intensity 120a and/or a spectral composition 120b of the light detected. The monitoring device 100 further comprises circuitry 122. The circuitry 122 is configured to determine if one or more bed bugs 104 are present in the detection region 108 based on the detection signal 118 and predetermined optical characteristics for one or more bed bugs 104.

The detection signal 118 may pertain to a change in the intensity 120a and/or a change in the spectral composition 120b of the light detected.

The housing 102 may comprise a transparent surface 146. The light source 106 is arranged such that the detection region 108 is on the transparent surface 146. The light source 106 and the light detector 110 are arranged on opposing sides of the transparent surface 146.

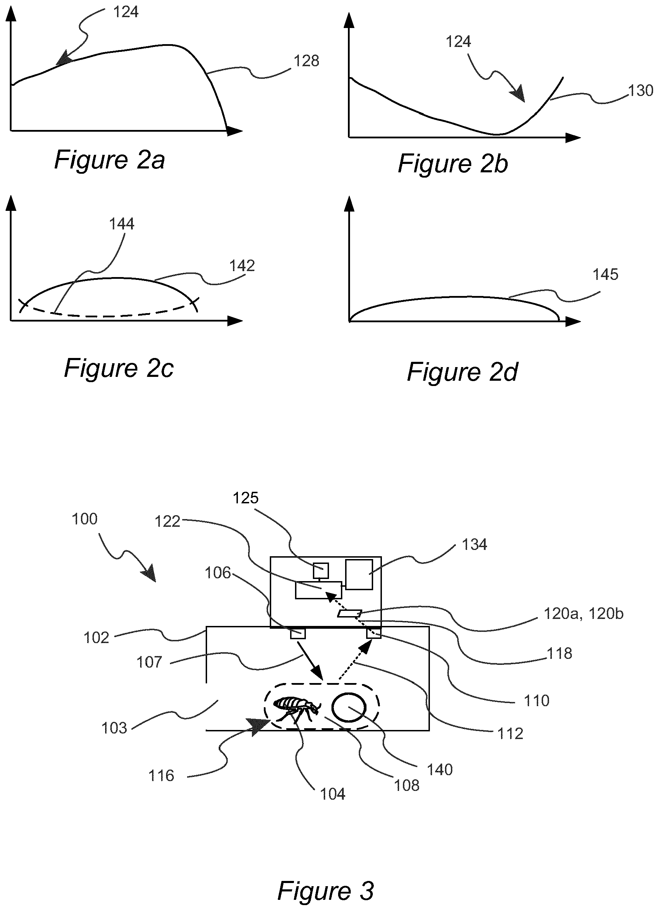

Figures 2a to 2d show schematically optical characteristics of a plurality of objects. With further reference to Figures 1a, 1b and 2a-d, the predetermined optical characteristics 124 may pertain to a bed bug light reflection profile 128 or a bed bug light transmission profile 130. By way of example, the bed bug light reflection profile 128 or a bed bug light transmission profile 130 are illustrated by relative reflection or relative transmission as function of wavelength in Figures 2a and 2b, respectively.

The predetermined optical characteristics may be stored on a memory 125 of the monitoring device 100. Put differently, data pertaining to at least a part of the bed bug light reflection profile 128 or the bed bug light transmission profile 130, may be stored on the memory 125.

The circuitry 122 may be configured to register a presence event 126 upon the determined presence of one or more bed bugs 104 in the detection region.

The circuitry 122 may further be configured to output an alert signal 132 indicative of the presence event 126.

With further reference to Figures 1a and 1b, the monitoring device 100 may further comprise a communication unit 134. The circuitry 122 may be configured to, via the communication unit 134 transmit 136 the alert signal 132 to a server 138. The server 138 may be in communication with the monitoring device 100 via a communication network 139. The circuitry 122 of the monitoring device 100 may be arranged to retrieve data from the server 138. The retrieved data may pertain to the predetermined optical characteristics. The predetermined optical characteristics may be stored on a memory 127 of the server 138.

Figure 3 shows a cross-sectional side view of a monitoring device 100 according to some examples of the present disclosure. With reference to Figures 2a-d and 3, the monitoring device 100 may further comprise a reference object 140 arranged within the detection region 108. The reference object 140 may have a reference object light reflection profile 142 and/or a reference object light transmission profile 144, see Figure 2c. The circuitry 122 may further be configured to determine if a bed bug 104 is present in the detection region 108 based the reference object light reflection profile 142 or the reference object light transmission profile 144.

By illuminating the reference object with light from the light source 106 and detecting, by the light detector 110, light being reflected 112 by or transmitted 114 through the reference object 140 the reference object light reflection profile 142 or the reference object light transmission profile 144 may be acquired, see Figure 2c. By way of example, an illumination light profile 145 of the illumination 107 from the light source 106 is illustrated in Figure 2d.

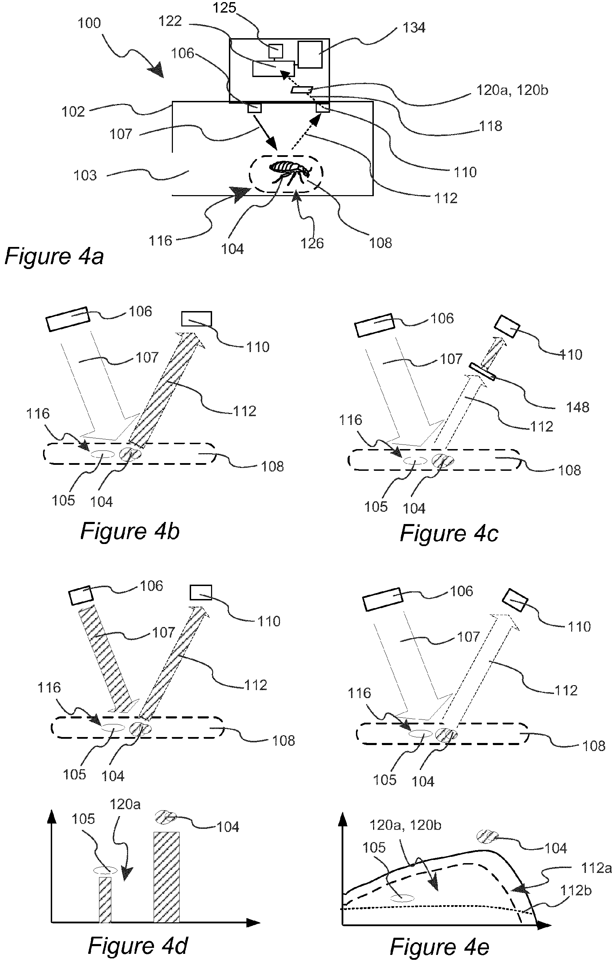

Figures 4a to 4e show a monitoring device and a number of different combinations of light emission and light detection for determining the presence of one or more bed bugs in a detection region. The monitoring device 100 is in Figure 4a arranged to utilize light reflected from insects present in the monitoring device 100. The description in relation to Figure 1a may at least partly be applicable to the monitoring device 100 of Figure 4a.

Figure 4b shows schematically a light source 106 and a light detector 110. The light source 100 may illuminate 107 the detection region 108. The light detector 110 is arranged to receive light from the light source 106 being reflected 112 by one or more objects 116 within the detection region 108. The detection signal 118, see Figure 4a, may pertain to a change in the intensity and/or a change in the spectral composition of the light detected. The objects 116 are here illustrated, by way of example, as a bed bug 104 and another insect 105. The monitoring device 100 is configured, as described above, to determine if one or more bed bugs 104 are present in the detection region 108. Put differently, the monitoring device 100 may distinguish between the bed bug 104 and the insect 105. In more detail predetermined optical characteristics for the bed bug 104 may be utilized. According to some examples, the monitoring device 100 may utilize that the bed bugs 104 may be have a distinct color in relation to other insects. The bed bug 104 may be redder in color than other insects 105, e.g. spiders or flies. More specifically, the bed bug 104 may have a light reflection profile that differ to the light reflection profile of the other insects 105. By way of example, the detection region 108 may be illuminated 107 with white light and a red part of the white light reflected by the bed bug 104 may be detected by the light detector 100. The light detector 110 may be arranged to detect the full spectrum of the light emitted from the light source 106. The white light may be in the visible range of the optical spectra. The light detector 110 may be arranged to detect a red part of the visible spectra. The presence of the bed bug 104 may thereby be detected. Put differently, the bed bug 104 may be detected by utilizing that bed bugs 104 may be redder (illustrated by the linear hatching) in color than other insects 105.

According to some examples, the light emitted from the light source 106 may have a first spectral range, SR1. The light detector 110 may be arranged to detect light in a second spectral range, SR2, the second spectral range SR2, being different from the first spectral range, SR1. The second spectral range, SR2, may match spectrally at least a part of the bed bug light reflection profile 128 or the bed bug light transmission profile 130. As exemplified above, the first spectral range, SR1, may be a broad band light spectrum. The broad band light may span the visible spectrum or at least a part thereof. The second spectral range, SR2, may span a region of longer wavelengths of the visible range. The second spectral range, SR2, may span a redder part of the visible spectrum.

Figure 4c shows schematically a light source 106 and a light detector 110 according to some examples. As described above, the light source 100 may illuminate 107 the detection region 108. The light detector 110 is arranged to receive light from the light source 106 being reflected 112 by one or more objects 116 within the detection region 108. The detection region 108 may be illuminated 107 with white light and a red part of the white light the bed bug 104 may be detected by the light detector 100. The monitoring device may comprise an optical filter 148. The optical filer 148 may be arranged to transmit the redder light.

The white light may be in the visible range of the optical spectra. The light detector 110 may be arranged to detect a red part of the visible spectra by use of the optical filter 148. Put differently, the optical filter 148 may be arranged to filter out light outside the redder part of the visible spectrum. The bed bug 104 may thereby be detected by utilizing that bed bugs 104 may be redder (illustrated by the linear hatching) in color than other insects 105.

Figure 4d shows schematically a light source 106 and a light detector 110 according to some examples. As described above, the light source 100 may illuminate 107 the detection region 108. The light detector 110 is arranged to receive light from the light source 106 being reflected 112 by one or more objects 116 within the detection region 108. The detection region 108 may be illuminated 107 with red light which may be reflected by the objects 116 in the detection region, see upper part of Figure 4d. The red light may be matched in wavelength to the color of the bed bugs 104. The bed bug 104 may thereby be detected by the light detector 110. In more detail, the detection signal may pertain to a change in the intensity 120a of the light detected. This is illustrated in the lower part of Figure 4d where the intensity of light in from the bed but 104 is larger than the intensity of light reflected by the other insect 105. The diagram illustrates the relative reflectance of the insects.

Figure 4e shows schematically a light source 106 and a light detector 110 according to some examples. As described above, the light source 100 may illuminate 107 the detection region 108. The light detector 110 is arranged to receive light from the light source 106 being reflected 112 by one or more objects 116 within the detection region 108. The detection region 108 may be illuminated 107 with white light and light reflected by the objects 116 in the detection region 108 may be detected by the light detector 100. The light detector 110 may be arranged to detect a wavelength range corresponding to the light emitted by the light source 106 or at least part thereof. As described above, the monitoring device 100 may determine if one or more bed bugs 104 are present in the detection region 108 based on the detection signal and predetermined optical characteristics for one or more bed bugs 104. By way of example, the detection signal may pertain to a change in the intensity 120a and/or a change in the spectral composition 120b of the light detected. This is illustrated in the lower part of Figure 4e where the spectral composition light of the light reflected by one or more objects 116 within the detection region 108 is captured. The diagram illustrates the relative reflectance as function of wavelength. By way of example, it may be determined that the spectral composition of light reflected 112a from the male bed bug 104 (solid line) and a female bed bug 104 (dashed line) is different from the spectral composition of light reflected 112b from the other insect 105 (dotted line).

By using data pertaining to the spectral composition of the detected light, the monitoring device may determine if one or more bed bugs 104 are present in the detection region 108. To this end, the determining may be based on the detection signal and predetermined optical characteristics for one or more bed bugs. The predetermined optical characteristics may pertain to a bed bug light reflection profile 128 as discussed above. By way of example, male (solid curve) and female (dashed line) bad bugs may be distinguished based on the predetermined optical characteristics for one or more bed bugs and the detection signal, See Figure 4e. To this end, different ages, states and/or stages of bed bugs may be distinguish based on the predetermined optical characteristics and the detected signal. Put differently, by detecting the spectral composition of light reflected from insects within the detection region bed bugs or species thereof may be detected. By way of example, it may be determined if one or more bed bugs have been fed or not.

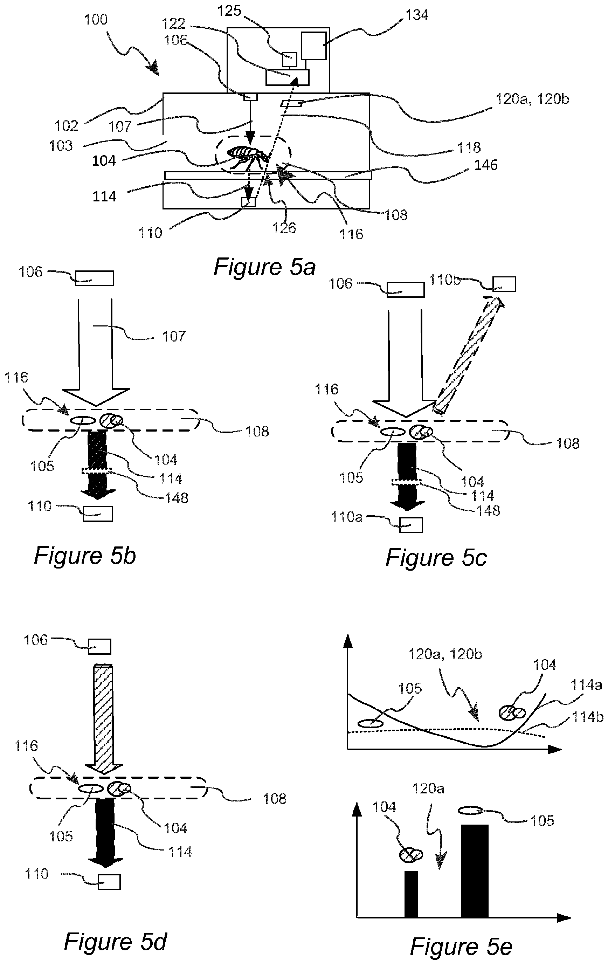

Figures 5a to 5e show another monitoring device 100 and a number of different combinations of light emission and light detection for determining the presence of one or more bed bugs in a detection region 108. The monitoring device 100 is in Figure 5a arranged to utilize light transmitted through objects 116, e.g. insects present in the monitoring device 100. The description in relation of Figure 1b may at least partly be applicable to the monitoring device 100 of Figure 5a.

Figure 5b shows schematically a light source 106 and a light detector 110. The light source 100 may illuminate 107 the detection region 108. The light detector 110 is arranged to receive light from the light source 106 being transmitted 114 through one or more objects 116 within the detection region 108. The detection signal 118, see Figure 5a, may pertain to a change in the intensity and/or a change in the spectral composition of the light detected. The objects 116 are here illustrated, by way of example, as a bed bug 104 and another insect 105. The monitoring device 100 allows as described above to determine if one or more bed bugs 104 are present in the detection region 108. Put differently, the monitoring device 100 may distinguish between the bed bug 104 and the insect 105. In more detail predetermined optical characteristics for the bed bug 104 is utilized. According to some examples, the monitoring device 100 may utilize that the bed bugs 104 may be have a distinct color in relation to other insects. The bed bug 104 may be redder in color than other insects 105, e.g. spiders or flies, i.e. reflected light in the red part of the visible spectrum. More specifically, the bed bug 104 may have a light transmission profile that differ to the light transmission profile of the other insects 105. By way of example the detection region 108 may be illuminated 107 with white light and a portion of the white light may be detected.

The light detector 110 may be arranged to detect the full spectrum of the light emitted from the light source 106. The presence of the bed bug 104 may be detected. The white light may be in the visible range of the optical spectra. The light detector 110 may be arranged to detect a portion of the visible spectra. The monitoring device may comprise an optical filter 148. Put differently, the bed bug 104 may be detected by utilizing that bed bugs 104 may be redder in color than other insects 105. By way of example, a reduced intensity in the red part of the spectrum may be detected. To this end, the bed bug 104 may reflect red light whereby the spectral components of the reflected light 112 are to a lesser degree detectable in the transmitted light 114. This is illustrated in Figure 5e, as will be discussed further.

Figure 5c shows schematically a light source 106 and two light detectors, 110a and 110b according to some examples. The light detector 110a is arranged to receive light from the light source 106 being transmitted 114 through one or more objects 116 within the detection region 108. The light detector 110b is arranged to receive light from the light source 106 being reflected 112 by one or more objects 116 within the detection region 108. Complimentary optical information may thereby be captured by reflection and/transmission measurements.

Figure 5d shows schematically a light source 106 and a light detector 110 according to some examples. As described above, the light source 100 may illuminate 107 the detection region 108. The light detector 110 is arranged to receive light from the light source 106 being transmitted 114 by one or more objects 116 within the detection region 108. The detection region 108 may be illuminated 107 with light in the redder part of the visible spectra. The bed bug 104 may be detected by the light detector 100. In more detail, the detection signal may pertain to a change in the intensity 120a of the light detected. This is illustrated in the lower part of Figure 5e where the intensity of light in from the bed bug 104 is smaller than the intensity of light reflected by the other insect 105. The diagram illustrates the relative transmission of the insects.

As described above, the monitoring device 100 may determine if one or more bed bugs 104 are present in the detection region 108 based on the detection signal and predetermined optical characteristics for one or more bed bugs 104. By way of example, the detection signal may pertain to a change in the intensity 120a and/or a change in the spectral composition 120b of the light detected. This is illustrated in the upper part of Figure 5e where the spectral composition light of the light transmitted by one or more objects 116 within the detection region 108 is captured. The diagram illustrates the relative transmission as function of wavelength. By way of example, it may be determined that the spectral composition of light transmitted 114a through a bed bug 104 (solid line) is different from the spectral composition of light transmitted 114b through another insect 105 (dotted line). By using data pertaining to the spectral composition of the detected light, the monitoring device may determine if one or more bed bugs 104 are present in the detection region 108. To this end, the determining may be based on the detection signal and predetermined optical characteristics for one or more bed bugs. The predetermined optical characteristics may pertain to a bed bug light transmission profile 130 as discussed above.

By way of example, the light emitted from the light source 106 may have a first spectral range, SR1. The light detector 110 may be arranged to detect light in a second spectral range, SR2, the second spectral range SR2, being different from the first spectral range, SR1. The second spectral range, SR2, may match spectrally at least a part of the bed bug light transmission profile 130.

The light emitted from the light source 106 may have a spectral range, SR, and the light detector 110 may be arranged to detect light in the same spectral range, SR. The spectral range, SR, match spectrally at least a part of the bed bug light transmission profile 130, and wherein the circuitry 122 is configured to determine if one or more bed bugs 104 are present in the detection region 108 based on a change in the detection signal being indicative of a change in light intensity on the light detector 110 and the bed bug light transmission profile 130.

By way of example. The first spectral range, SR1, covers a wavelength range from 400 nm to 800 nm, preferably from 500 nm to 750 nm and wherein the second spectral range, SR2, covers a wavelength range from 550 nm to 730 nm, preferably between 600 nm and 720 nm, more preferably between 620 and 710 nm.

The spectral range, SR, may cover a wavelength range from 550 nm to 730 nm, preferably between 600 nm and 720 nm, more preferably between 620 and 710 nm.

The light emitted from the light source 106 may have a spectral range, SR. The light detector 110 may be arranged to detect light in the same spectral range, SR, wherein the spectral range, SR, match spectrally at least a part of the bed bug light reflection profile and wherein the circuitry 122 is configured to determine if one or more bed bugs 104 are present in the detection region 118 based on a change in the detection signal being indicative of a decrease in light intensity on the light detector 110 and the bed bug light absorption profile 130.

The monitoring device may comprise an optical filter 148 arranged in front of the light detector 110, the optical filter 148 comprising one or more of a high-pass filter, a low-pass filter, and a band pass filter arranged to pass light having a wavelength range corresponding to that of the bed bug light reflection profile 128 or the bed bug light transmission profile 130.

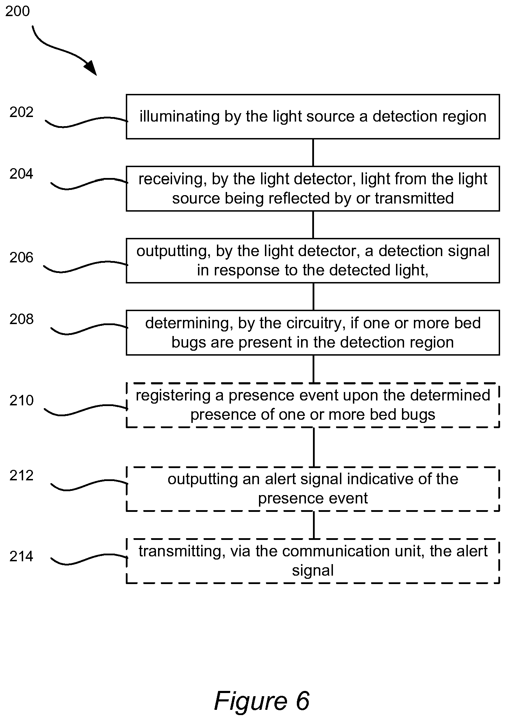

Figure 6 shows schematically a flow chart of a method for determining the presence of bed bugs in a monitoring device. The monitoring device 100 comprises a housing 102 arranged to receive bed bugs 104 entering into the housing 102, a light source 106, a light detector 110, and a circuitry 122 as described above.

With reference to Figure 6 and Figures 1a and 1b, the method 200 comprises illuminating 202 by the light source 106 a detection region 108 within the housing 102 and receiving 204, by the light detector 110, light from the light source 106 being reflected by 112 or transmitted through 114 one or more objects 116 within the detection region 118. The method 200 comprises outputting 206, by the light detector 110, a detection signal 118 in response to the detected light, the detection signal 120 pertaining to an intensity 120a and/or a spectral composition 120b of the light detected. The method 200 further comprises determining 208, by the circuitry 122, if one or more bed bugs 104 are present in the detection region 108 based on the detection signal 118 and predetermined optical characteristics 124 for one or more bed bugs 104.

The method 200 may comprise registering 210 a presence event 126 upon the determined presence of one or more bed bugs 104 in the detection region 108.

The monitoring device 100 may comprise a communication unit 134 and wherein the method 200 further comprises by the circuitry 122. The method 200 may further comprise outputting 212 an alert signal 132 indicative of the presence event 126 and transmitting 214, via the communication unit 134, the alert signal 132 to a server 138 or another monitoring device 100.

The person skilled in the art realizes that the present disclosure is not limited to the preferred examples described above. The person skilled in the art further realizes that modifications and variations are possible within the scope of the appended claims. Additionally, variations to the disclosed examples can be understood and effected by the skilled person in practicing the claimed disclosure, from a study of the drawings, the disclosure, and the appended claims.

## Claims

1. A monitoring device for determining the presence of bed bugs, the monitoring device (100) comprising: a housing (102) arranged to receive bed bugs (104) entering into the housing (102); a light source (106) arranged to illuminate (107) a detection region (108) within the housing (102); a light detector (110) arranged to receive light from the light source (106) being reflected by (112) or transmitted through (114) one or more objects (116) within the detection region (108), and wherein the light detector (110) is configured to output a detection signal (118) in response to the detected light, the detection signal (118) pertaining to an intensity (120a) and/or a spectral composition (120b) of the light detected; and circuitry (122) configured to determine if one or more bed bugs (104) are present in the detection region (108) based on the detection signal (118) and predetermined optical characteristics (124) for one or more bed bugs (104).

2. The monitoring device according to claim 1, wherein the circuitry (122) is configured to register a presence event (126) upon the determined presence of one or more bed bugs (104) in the detection region.

3. The monitoring device according to claim 1 or 2, wherein the predetermined optical characteristics (124) pertains to a bed bug light reflection profile (128) or a bed bug light transmission profile (130).

4. The monitoring device according to any one of claims 1 to 3, wherein the detection signal (118) pertains to a change in the intensity (120a) and/or a change in the spectral composition (120b) of the light detected.

5. The monitoring device according to any one of claims 2 to 4, wherein the circuitry (122) is further configured to output an alert signal (132) indicative of the presence event (126).

6. The monitoring device according to claim 5, wherein the monitoring device (100) further comprises a communication unit (134) and wherein the circuitry (122) is configured to, via the communication unit (134) transmit (136) the alert signal (132) to a server (138).

7. The monitoring device according to any one of claims 1 to 6, wherein the monitoring device (100) further comprises a reference object (140) arranged within the detection region (108), the reference object (140) having a reference object light reflection profile (142) and/or a reference object light transmission profile (144), and wherein the circuitry (122) is further configured to determine if a bed bug (104) is present in the detection region (108) based the reference object light reflection profile (142) or the reference object light transmission profile (144).

8. The monitoring device according to any one of claims 2 to 6, wherein the light emitted from the light source (106) has a first spectral range, SR1, and wherein the light detector (110) is arranged to detect light in a second spectral range, SR2, the second spectral range SR2, being different from the first spectral range, SR1, and wherein the second spectral range, SR2, match spectrally at least a part of the bed bug light reflection profile (128) or the bed bug light transmission profile (130).

9. The monitoring device according to any one of claims 2 to 6, wherein the light emitted from the light source (106) has a spectral range, SR, and the light detector (110) is arranged to detect light in the same spectral range, SR, wherein the spectral range, SR, match spectrally at least a part of the bed bug light reflection profile (128), and wherein the circuitry (122) is configured to determine if one or more bed bugs (104) are present in the detection region (108) based on a change in the detection signal being indicative of a change in light intensity on the light detector (110) and the bed bug light reflection profile (128).

10. The monitoring device according to any one of claims 1 to 6, wherein the housing (102) comprises a transparent surface (146) and the light source (106) is arranged such that the detection region (108) is on the transparent surface (146), and wherein the light source (106) and the light detector (110) are arranged on opposing sides of the transparent surface (146).

11. The monitoring device according to claim 10, wherein the light emitted from the light source (106) has a spectral range, SR, and the light detector (110) is arranged to detect light in the same spectral range, SR, wherein the spectral range, SR, match spectrally at least a part of the bed bug light reflection profile and wherein the circuitry (122) is configured to determine if one or more bed bugs (104) are present in the detection region (118) based on a change in the detection signal being indicative of a decrease in light intensity on the light detector (110) and the bed bug light absorption profile.

12. The monitoring device according to any one of claims 1 to 11, further comprising an optical filter (148) arranged in front of the light detector (110), the optical filter (148) comprising one or more of a high-pass filter, a low-pass filter, and a band pass filter arranged to pass light having a wavelength range corresponding to that of the bed bug light reflection profile (128) or the bed bug light transmission profile (130).

13. A method for determining the presence of bed bugs in a monitoring device, the monitoring device (100) comprising: a housing (102) arranged to receive bed bugs (104) entering into the housing (102), a light source (106), a light detector (110), and a circuitry (122); the method (200) comprising: illuminating (202) by the light source (106) a detection region (108) within the housing (102); receiving (204), by the light detector (110), light from the light source (106) being reflected (112) by or transmitted (114) through one or more objects (116) within the detection region (118); outputting (206), by the light detector (110), a detection signal (118) in response to the detected light, the detection signal (120) pertaining to an intensity (120a) and/or a spectral composition (120b) of the light detected; and determining (208), by the circuitry (122), if one or more bed bugs (104) are present in the detection region (108) based on the detection signal (118) and predetermined optical characteristics (124) for one or more bed bugs (104).

14. The method according to claim 13, further comprising registering (210) a presence event (126) upon the determined presence of one or more bed bugs (104) in the detection region (108).

15. The method according to claim 14, wherein the monitoring device (100) comprises a communication unit (134) and wherein the method (200) further comprises by the circuitry (122): outputting (212) an alert signal (132) indicative of the presence event (126) and transmitting (214), via the communication unit (134), the alert signal (132) to a server (138) or another monitoring device (100).
